# EUROPEAN PATENT APPLICATION

(11) **EP 4 273 770 A1**
(43) Date of publication of application: **08.11.2023**
(21) Application number: 22171196.3
(22) Date of filing: 02.05.2022
(51) Int. Cl.: G06Q 10/06, G06Q 10/08, G06Q 10/04

(54) **AN ENVIRONMENTAL IMPACT MONITORING SYSTEM AND A COMPUTER-IMPLEMENTED METHOD FOR MONITORING THE ENVIRONMENTAL IMPACT OF TRANSPORTED GOODS**

(71) Applicant: Volvo Truck Corporation, 405 08 Göteborg (SE)
(72) Inventor: THORMAN, Mikael, 417 42 Göteborg (SE); HUMLEFJÄLL, Mathias, 429 32 Kullavik (SE); ÅGREN, Henrik, 411 19 Göteborg (SE); KLEIMARK, Charlotte, 431 66 Mölndal (SE)
(74) Representative: Zacco Sweden AB

(57) **Abstract**

An environmental impact monitoring system and a computer implemented method therein for monitoring the environmental impact of each item of goods transported as part of a transport assignment for a vehicle is provided. The environmental impact monitoring system obtains a total energy consumption measured for the transport assignment by the vehicle. The environmental impact monitoring system also assigns a part of the measured total energy consumption to each transported item of goods. The environmental impact monitoring system further associates an environmental impact to each transported item of goods based on the assigned part of the measured total energy consumption to each transported item of goods. Further, the environmental impact monitoring system, upon request, provides the environmental impact associated with each transported item of goods.

## Description

### TECHNICAL FIELD

Embodiments herein relate in general to monitoring environmental impact of transported goods. In particular, embodiments herein relate to an environmental impact monitoring system and computer implemented method for monitoring the environmental impact of each item of goods transported as part of a transport assignment for a vehicle. Further, the embodiments herein also relate to a computer program product for performing the computer implemented method and a computer program product carrier.

### BACKGROUND

As goods are being transported as part of a transport assignment or mission for a freight, trucking or transport vehicle, there are many different stakeholders involved in getting each of the items of goods from its origin to its destination. A transport buyer, such as, e.g. business-to-consumer, B2C, company, may order its items of goods to be transported from a warehouse or factory to its local storage facility or local store as part of a transport assignment or mission. The order may be given to a transport or carrier service company, which may have a mixed transport fleet of transportation vehicles and/or one or more sub-contractors or smaller transport firms that each operates their own vehicle(s) or mixed transport fleets. Mixed transport fleet of transportation vehicles may here refer to various vehicles, such as, e.g. trucks or smaller cargo transport vehicles, from various different brands having different means of fuel/energy propulsion, thus resulting in different environmental impacts for similar operations.

As there are increasing demands on companies today to demonstrate their environmental or CO₂ footprint all the way down to each specific item being purchased by the end consumer, there is also an increasing demand to more accurately predict or estimate the environmental impact of the transportation of each item of goods from its source of origin to its final end consumer location. However, in view of the many stakeholders involved in transporting a specific item of goods from one destination to another, there is often a lack of data and granularity that allows for any type of disaggregation, as well as, standard estimations and unknown variances used when assessing the environmental impact of the transportation of goods. Hence, there is a need to improve the monitoring of the environmental impact caused by transported goods.

### SUMMARY

It is an object of embodiments herein to provide an environmental impact monitoring system and computer implemented method, along with a computer program product and carrier, for monitoring the environmental impact of each item of goods transported as part of a transport assignment for a vehicle that seeks to mitigate, alleviate, or eliminate all or at least some of the above-discussed drawbacks of presently known solutions.

According to a first aspect of embodiments herein, the object is achieved by a computer implemented method for monitoring the environmental impact of each item of goods transported as part of a transport assignment for a vehicle. The method comprise obtaining a total energy consumption measured for the transport assignment by the vehicle. The method also comprises assigning a part of the measured total energy consumption to each transported item of goods. The method further comprises associating an environmental impact to each transported item of goods based on the assigned part of the measured total energy consumption to each transported item of goods. Further, the method comprises, upon request, providing the environmental impact associated with each transported item of goods.

By obtaining the actual measured energy consumption by a vehicle for a transport assignment comprising items of goods, each item of goods may be assigned a measured part of the energy consumption and thus be associated with a corresponding environmental impact. This allows for a more accurate and fair estimation of each items relative environmental impact, which may be presented to an operator ordering the transport assignment from carrier service. Hence, monitoring of the environmental impact caused by a transported item of goods is improved.

In some embodiments, the method may further comprise receiving, from the vehicle, information comprising one or more of: an on-board measurement of the actual amount of fuel and/or energy that has been consumed by the vehicle during the transport assignment, a fuel/energy type indication of the fuel/energy used by the vehicle, one or more time stamp events indicating starts/stops of the vehicle, and an on-board measurement of the actual distance that the vehicle has travelled during the transport assignment. In this case, according to some embodiments, the method may also comprise determining the measured total energy consumption based on the information from the vehicle. This means that accurate data directly from the vehicle, such as, e.g. which fuel/energy was used by the vehicle and how much fuel/energy was actually used by the vehicle, may be retrieved and used in the association of an environmental impact to each transported item of goods.

In some embodiments, the method may further comprise receiving, from a transport assignment system and/or transport system, information relating to the transport assignment, wherein the information comprise one or more of: a transport order for the transport assignment, a vehicle type indication of the vehicle that has been assigned to carry out the transport assignment, a fuel/energy type indication of the fuel/energy used by the vehicle that has been assigned to carry out the transport assignment, start/stop times of the transport assignment, and route information indicating the geographical location of the start/end location of the transport assignment. In this case, according to some embodiments, the method may also comprise determining the measured total energy consumption based on the information relating to the transport assignment from the transport assignment system. This means that information relating to the assigned route and/or vehicle for the transportation by a carrier service, or its subcontractors, may be retrieved and used in the association of an environmental impact to each transported item of goods.

In some embodiments, the method may further comprise receiving, from a transportation ordering system, information relating to the item of goods transported as part of the transport assignment, wherein the information comprise one or more of: the weight and size of each item of goods, the total number of the item of goods, a type indication of each item of goods, a reference to the transport assignment system to which a transport order for the transport assignment has been sent, and route information indicating the geographical location of the transport start/end location of the items of goods. In this case, according to some embodiments, the method may also comprise assigning a part of the measured total energy consumption to each transported item of goods based on the receiving information from the transportation ordering system. This means that information relating to each of the item of goods desired to be transported for a transport buyer by a carrier service, or its subcontractors, may be retrieved and used in the association of an environmental impact to each transported item of goods.

In some embodiments, the method may further comprise determining an environmental impact for each transported item of goods based on the assigned part of the measured total energy consumption to each transported item of goods and a predetermined or standard correlation estimates between energy consumption and environmental impact. This means that by assigning a more accurate energy consumption for the transport to each item of goods being part of the transportation, a more accurate environmental impact may be estimated for each item of goods based on well-defined and known correlations between energy consumption and environmental impact. In some embodiments, the environmental impact may be represented by a carbon-dioxide, CO₂, and/or carbon-dioxide equivalent, CO₂e, indicator. This means that a well-defined and commonly relatable measurement of the environmental impact may be established.

It should also be noted that multiple environmental impacts from multiple transport assignments of different vehicles may also be concatenated for each item of goods to capture a total environmental impact of the total transportation of each item of goods.

According to a second aspect of embodiments herein, the object is achieved by an environmental impact monitoring system for monitoring the environmental impact of each item of goods transported as part of a transport assignment for a vehicle. The environmental impact monitoring system comprising a processing circuitry and a memory, wherein the processing circuitry configured to obtain a total energy consumption measured for the transport assignment by the vehicle, assign a part of the measured total energy consumption to each transported item of goods, associate an environmental impact to each transported item of goods based on the assigned part of the measured total energy consumption to each transported item of goods, and provide the environmental impact associated with each transported item of goods.

According to a third aspect of the embodiments herein, the object is achieved by a computer program product comprising instructions which, when executed in a processing circuitry, cause the processing circuitry to carry out the methods described above. According to a fourth aspect of the embodiments herein, the object is achieved by a carrier containing any of the computer program products described above, wherein the carrier is one of an electronic signal, optical signal, radio signal, or computer-readable storage medium. The computer readable storage medium may be any type of memory device, including one of a removable non-volatile random-access memory, a hard disk drive, a floppy disk, a CD-ROM, a DVD-ROM, a USB memory, an SD memory card, or a similar computer readable medium known in the art.

### BRIEF DESCRIPTION OF THE DRAWINGS

Features and advantages of the embodiments will become readily apparent to those skilled in the art by the following detailed description of exemplary embodiments thereof with reference to the accompanying drawings, wherein:
- Fig. 1: illustrates communications system in which an environmental impact monitoring system according to some embodiments herein may be implemented,
- Fig. 2: is a schematic illustration of a route of a vehicle in accordance with a transport assignment according to some embodiments herein,
- Fig. 3: is a flowchart illustrating a method according to some embodiments,
- Fig. 4: is a signalling diagram illustrating a method according to some embodiments, and
- Fig. 5: is schematic block diagram illustrating embodiments of an environmental impact monitoring system.

### DETAILED DESCRIPTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description. It is to be understood that the present invention is not limited to the embodiments described herein and illustrated in the drawings; rather, the skilled person will recognize that many changes and modifications may be made within the scope of the appended claims.

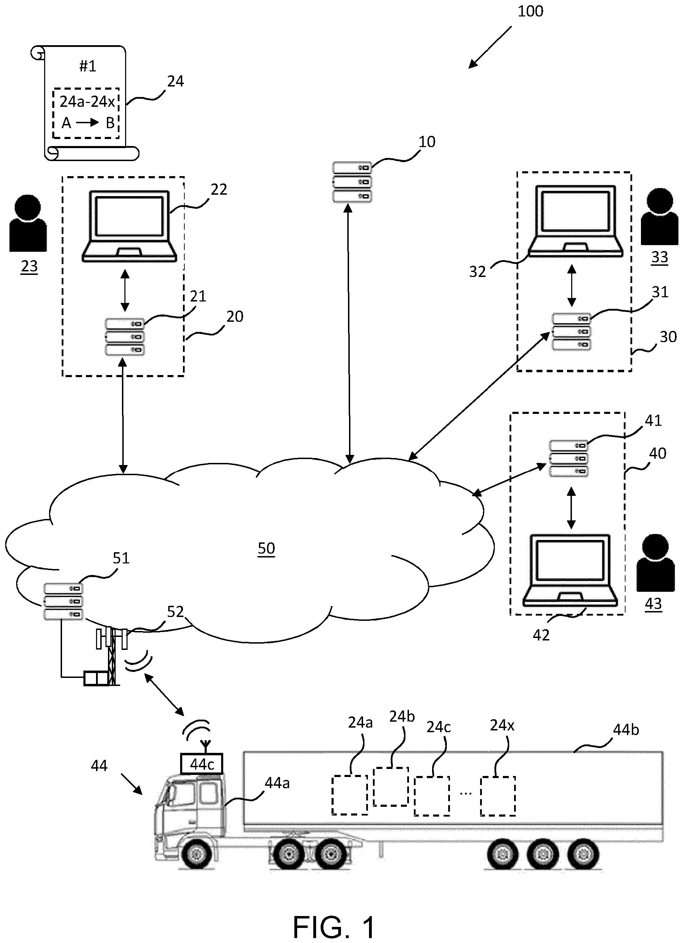

Fig. 1 illustrates an example of a system in which an environmental impact monitoring system 10 according to some embodiments may be implemented. The environmental impact monitoring system 10 may be configured to communicate with several different systems, such as, a transport ordering system 20, a transport assignment system 30, a transport system 40, etc., via a communications network 50, e.g. the Internet. The environmental impact monitoring system 10 may be operated on an online server and/or as a cloud service.

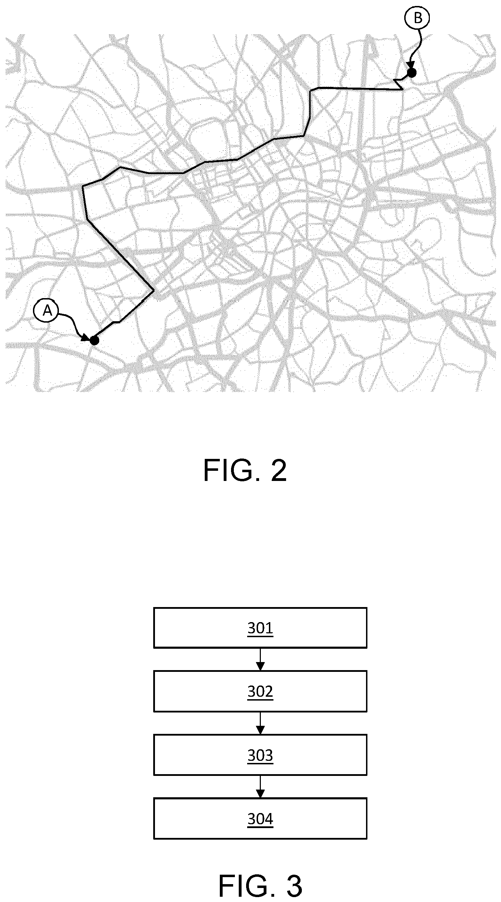

In the system, the **transport ordering system 20** is typically operated by a transport buyer, i.e. a company having a need to transport a number of items of goods from a first location to a second location and wishes to order the transportation from a carrier service. For example, an **operator 23,** such as, an employee of the transport buyer, may manually operate the transport ordering system 20 via a **user terminal 22.** The user terminal 22 may, for example, be a general purpose computer or laptop comprising a display and a keyboard. The user terminal 22, or a **server or cloud service 21** to which the user terminal 22 may be connected to and in communication with, may be configured with a transport ordering application that may be downloaded and installed from the environmental impact monitoring system 10. Optionally, the operator 23 of the transport ordering system 20 may use the user terminal 22 to enter an online transport ordering application operated by the environmental impact monitoring system 10 using a communications network 50, such as, the Internet. According to another option, information from a transport ordering application embedded in or operated by the user terminal 22, or the server or cloud service 21, may be configured to automatically be transferred to the environmental impact monitoring system 10, for example, when completing a transport assignment to a transport assignment system 30. The transport ordering application of the environmental impact monitoring system 10, or automatic information transfer to the environmental impact monitoring system 10, enable the transport ordering system 20, or operator thereof, to exchange information with the environmental impact monitoring system 10 associated with a transport assignment to a carrier service or logistics operator for the transportation of a number of items of goods from a first location to a second destination. For example, the operator 23 may enter, or automatically transfer, information regarding a **transport assignment 24** provided to a carrier service or logistics operator for transportation of a number of **items of goods 24a-24x** from a first location A to a second location B. A **first and second location A and B** and a route of a vehicle in accordance with transport assignment 24 therein between is exemplified in **Fig. 2****.**

In the system, the **transport assignment system 30** is typically operated by a carrier service or logistics operator for receiving and accepting transport assignments from a transport buyer, such as, e.g. the transport assignment 24 from the transport ordering system 20. For example, an **operator 33,** such as, an employee of the carrier service or logistics operator, may manually operate the transport assignment system 30 via a **user terminal 32.** The user terminal 32 may, for example, be a general purpose computer or laptop comprising a display and a keyboard. The user terminal 32, or a **server or cloud service 31** to which the user terminal 32 may be connected to and in communication with, may be configured with a transport assignment application that may be downloaded and installed from the environmental impact monitoring system 10. Optionally, the operator 33 of the transport assignment system 30 may use the user terminal 22 to enter an online transport assignment application of the environmental impact monitoring system 10 using the communications network 50. According to another option, information from a transport assignment application embedded in or operated by the user terminal 32, or the server or cloud service 31, may be configured to automatically be transferred to the environmental impact monitoring system 10, for example, when receiving or accepting a transport assignment from the transport ordering system 20. The transport assignment application of the environmental impact monitoring system 10, or automatic information transfer to the environmental impact monitoring system 10, may enable the transport assignment system 30, or operator thereof, to exchange information with the environmental impact monitoring system 10 associated with a transport assignment from a transport buyer for the transportation of a number of items of goods from a first location to a second destination. For example, the operator 33 may enter, or automatically transfer, information regarding a transport assignment 24 provided by a transport buyer for transportation of a number of items of goods 24a-24x from a first location A to a second location B.

In the system, the **transport system 40** is typically operated by a trucking company for receiving and accepting transport orders from the transport assignment system 30, e.g. a transport order corresponding to the transport assignment 24 from the transport ordering system 20. For example, an **operator 43,** such as, an employee of the trucking company, may manually operate the transport system 40 via a **user terminal 42.** The user terminal 42 may, for example, be a general purpose computer or laptop comprising a display and a keyboard. In some embodiments, the user terminal 42, or a **server or cloud service 41** to which the user terminal 42 may be connected to and in communication with, may be configured with a transport order application that may be downloaded and installed from the environmental impact monitoring system 10. Optionally, an operator 43 of the transport system 40 may use the user terminal 42 to enter an online transport order application of the environmental impact monitoring system 10 using the communications network 50. According to another option, information from a transport order application embedded in or operated by the user terminal 42, or the server or cloud service 41, may be configured to automatically be transferred to the environmental impact monitoring system 10, for example, upon and after receiving the transport order from the transport assignment system 30. The transport order application of the environmental impact monitoring system 10, or automatic information transfer to the environmental impact monitoring system 10, may enable the transport system 40, or operator thereof, to exchange information with the environmental impact monitoring system 10 associated with a transport assignment from a transport buyer for the transportation of a number of items of goods from a first location to a second destination. For example, the operator 43 may enter, or automatically transfer, information regarding a transport order associated with the transport assignment 24 for transportation of a number of items of goods 24a-24x from a first location A to a second location B.

Here, it should be noted that the trucking company may be a sub-contractor of a carrier service or logistics operator, or be a part of an in-house trucking company of the carrier service or logistics operator. The trucking company may be operating one or more vehicles or fleet of vehicles for transporting items of goods. One example of such a vehicle is shown in Fig. 1. In this case, the **vehicle 44** is exemplified as a heavy-duty vehicle combination for cargo transport. The vehicle 44 in Fig. 1 comprises a **truck or towing vehicle 44a** configured to tow a **trailer unit 44b** in a known manner, e.g., by a fifth wheel connection. Herein, a heavy-duty vehicle is taken to be a vehicle designed for the handling and transport of heavier objects or large quantities of item of goods 24a-24x. The vehicle 44 may, for example, be one of an electric or hybrid vehicle, or possibly a gas, gasoline or diesel vehicle. The vehicle 44 may comprise an electric machine (in case of being an electric or hybrid vehicle) or an engine (such as an internal combustion engine in case of being a gas, gasoline or diesel vehicle). The vehicle 44 may further be manually operated, fully or semi-autonomous. Even though the embodiments herein are described mainly with respect to heavy-duty vehicles, such as, e.g. semi-trailer vehicles or trucks for cargo and goods transport, the embodiments herein should not be considered restricted to this particular type of vehicle but may also be used in other types of vehicles, such as, a car, a bus, a marine vessel, etc.

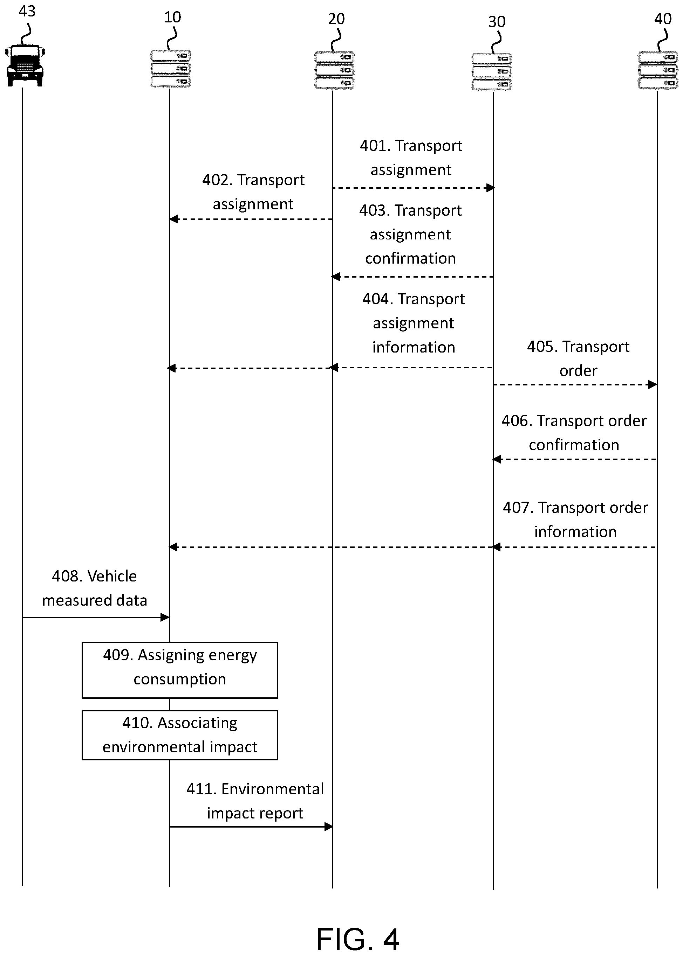

It should further be noted that each of the vehicles of the trucking company, such as, the vehicle 44, may comprise a **telecommunication or telematics device 44c.** The telecommunication or telematics device 44c may be configured to wirelessly transmit measured vehicle characteristics and operating data using the communications network 50, e.g. via a radio base station 52 connected to telecommunications network node 51 with access to the communications network 50. The vehicle characteristics and operating data, as exemplified in the embodiments below, may be transmitted by the telecommunication or telematics device 44c to the environmental impact monitoring system 10, directly or via the transport system 40. It should further be noted that although only one transport system 40 is shown in the example of Fig. 4, there may be several sub-contractors or trucking companies in turn also having sub-contractors or affiliated truckers/trucking companies associated thereto involved in delivering the transport order. Each of these may also involve one or more transport systems similar to the transport system 40. In other words, in some embodiments, there may be several transport systems sharing the delivery of the transport order with the transport system 40.

Examples of embodiments of a computer-implemented method for monitoring the environmental impact of each item of goods 24a-24x transported as part of a transport assignment 24 for a vehicle 44, will now be described with reference to the flowchart depicted in **Fig. 3.** Fig. 3 is an illustrated example of actions, steps or operations which may be performed by the environmental impact monitoring system 10 described above with reference to Fig. 1. The method may comprise the following actions, steps or operations.

**Action 301.** The environmental impact monitoring system 10 obtains a total energy consumption measured for the transport assignment 24 by the vehicle 44. This means, for example, that measured vehicle characteristics and operating data may be transmitted by the telecommunication or telematics device 44c on the vehicle 44 to the environmental impact monitoring system 10 via the transport system 40. According to some embodiments, the environmental impact monitoring system 10 may receive, from the vehicle 44, information comprising one or more of: an on-board measurement of the actual amount of fuel and/or energy that has been consumed by the vehicle 44 during the transport assignment 24, a fuel/energy type indication of the fuel/energy used by the vehicle 44, one or more time stamp events indicating starts/stops of the vehicle 44, and an on-board measurement of the actual distance that the vehicle 44 has travelled during the transport assignment 24. In this case, the environmental impact monitoring system 10 may also determine the measured total energy consumption based on the information from the vehicle 44.

Furthermore, according to some embodiments, the environmental impact monitoring system 10 may also receive, from a transport assignment system 30 and/or a transport system 40, information relating to the transport assignment 24. Here, the information comprise one or more of: a transport order for the transport assignment 24, a vehicle type indication of the vehicle 44 that has been assigned to carry out the transport assignment 24, a fuel/energy type indication of the fuel/energy used by the vehicle 44 that has been assigned to carry out the transport assignment 24, start/stop times of the transport assignment 24, and route information indicating the geographical location of the start/end location of the transport assignment 24. In this case, the environmental impact monitoring system 10 may also determine the measured total energy consumption based on the information relating to the transport assignment 24 from the transport assignment system 30 and/or the transport system 40.

**Action 302.** After obtaining the total energy consumption in Action 301, the environmental impact monitoring system 10 assigns a part of the measured total energy consumption to each transported item of goods 24a-24x. This means, for example, that each transported item of goods 24a-24x in a transport assignment 24 may be associated with a corresponding amount of energy consumption caused by its transportation according to the transport assignment 24. According to some embodiments, the environmental impact monitoring system 10 may receive, from a transportation ordering system 20, information relating to the item of goods 24a-24x transported as part of the transport assignment 24. Here, this information may comprise one or more of: the weight and size of each item of goods 24a-24x, the total number of the item of goods 24a-24x, a type indication of each item of goods 24a-24x, a reference to the transport system 40 to which a transport order for the transport assignment 24 has been sent, and route information indicating the geographical location of the transport start/end location of the items of goods 24a-24x. In this case, the environmental impact monitoring system 10 may also assign a part of the measured total energy consumption to each transported item of goods 24a-24x based on the receiving information from the transportation ordering system 20.

**Action 303.** After the assigning energy consumption to each transported item of goods 24a-24x in Action 302, the environmental impact monitoring system 10 associates an environmental impact to each transported item of goods 24a-24x based on the assigned part of the measured total energy consumption to each transported item of goods 24a-24x. This means, for example, that the assigned energy consumption to a transported item of goods may be converted into a known measured quantity relating to the impact that this particular transportation of this particular item of goods will have on the environment. In some embodiments, the environmental impact monitoring system 10 may determine an environmental impact for each transported item of goods 24a-24x based on the assigned part of the measured total energy consumption to each transported item of goods 24a-24x and predetermined or standard correlation estimates between energy consumption and environmental impact. In some embodiments, the environmental impact may be represented by a carbon-dioxide, CO₂, and/or carbon-dioxide equivalent, CO₂e, indicator.

**Action 304.** After receiving the association in Action 303, the environmental impact monitoring system 10, on request, provides the environmental impact associated with each transported item of goods 24a-24x. This means, for example, that one or more of the stakeholders involved in the transportation of a particular item of goods, e.g. the transport ordering system 20 or operator thereof, the transport assignment system 30 or operator thereof, or the transport system 40 or operator thereof, etc., may be allowed access to a more accurate environmental impact indication or value coupled to this particular transportation of this particular item of goods. For example, a report of the environmental impact associated with each transported item of goods 24a-24x may be transmitted to the transport ordering system 20 if it is, or has been, requested by the transport ordering system 20.

**Fig. 4** shows a signalling diagram illustrating an example of signalling in the system shown in Fig. 1 according to some embodiments of the method described above.

In **Action 401,** the transport ordering system 20 transmits a transport assignment 24 to the transport assignment system 30. For example, a transport buyer assigns a transport assignment 24 to a carrier service.

In **Action 402,** the transport ordering system 20 also makes the transport assignment 24 available to the environmental impact monitoring system 10. For example, the transport ordering system 20 may automatically transmit the transport assignment 24 to the environmental impact monitoring system 10. Hence, the environmental impact system 10 may make the necessary configurations in order to be able to monitor the environmental impact associated with the transport assignment 24. The transport assignment 24 may comprise information, such as, for example, the weight and size of each item of goods 24a-24x, the total number of the item of goods 24a-24x, a type indication of each item of goods 24a-24x, a reference to the transport system 40 to which a transport order for the transport assignment 24 has been sent, and route information indicating the geographical location of the transport start/end location of the items of goods 24a-24x.

In **Action 403,** the transport assignment system 30 may accept and confirm the transport assignment to the transport ordering system 20. For example, the carrier service confirms the transport assignment to the transport buyer.

In **Action 404,** the transport assignment system 30 may optionally provide more detailed information regarding the execution of the transport assignment to both the environmental impact monitoring system 10, directly or via the transport ordering system 20. This information may, for example, comprise the transport order for the transport assignment 24, a vehicle type indication of the vehicle 44 that has been assigned to carry out the transport assignment 24, a fuel/energy type indication of the fuel/energy used by the vehicle 44 that has been assigned to carry out the transport assignment 24, start/stop times of the transport assignment 24, and route information indicating the geographical location of the start/end location of the transport assignment 24. Some of this information may also be provided by the transport system 40 as described below.

In **Action 405,** the transport assignment system 30 transmits a transport order to a transport system 40. For example, the carrier service orders trucking company to perform the actual physical transport of the items of goods 24a-24x according to the transport assignment 24.

In **Action 406,** the transport system 40 may accept and confirm the transport order to the transport assignment system 30. For example, the trucking company confirms the transport order to the carrier service.

In **Action 407,** the transport assignment system 30 may optionally provide more detailed information regarding the execution of the transport assignment to both the environmental impact monitoring system 10, directly or via the transport assignment system 30. This information may, for example, comprise the transport order for the transport assignment 24, a vehicle type indication of the vehicle 44 that has been assigned to carry out the transport assignment 24, a fuel/energy type indication of the fuel/energy used by the vehicle 44 that has been assigned to carry out the transport assignment 24, start/stop times of the transport assignment 24, and route information indicating the geographical location of the start/end location of the transport assignment 24.

In **Action 408,** the vehicle 44 transmits measured vehicle characteristics and operating data relating to the total energy consumption for the transport according to the transport order to the environmental impact monitoring system 10. This may be performed during and/or after performing the actual physical transport of the items of goods 24a-24x according to the transport assignment 24. Also, this may be performed directly to the environmental impact monitoring system 10 or via the transport system 40. This vehicle characteristics and operating data may, for example, comprise on-board measurement of the actual amount of fuel and/or energy that has been consumed by the vehicle 44 during the transport assignment 24, a fuel/energy type indication of the fuel/energy used by the vehicle 44, one or more time stamp events indicating starts/stops of the vehicle 44, and an on-board measurement of the actual distance that the vehicle 44 has travelled during the transport assignment 24.

In **Action 409,** the environmental impact monitoring system 10 assigns a part of the measured total energy consumption to each transported item of goods 24a-24x. This means, for example, that the information made available by the transport ordering system 20 in Action 402 for each transported item of goods 24a-24x and the measure total energy consumption actually consumed for the transportation of the transported items of goods 24a-24x may be combined in order to fairly share the measured total energy consumption between each transported item of goods 24a-24x.

In **Action 410,** the environmental impact monitoring system 10 associates an environmental impact to each transported item of goods 24a-24x based on the assigned part of the measured total energy consumption to each transported item of goods 24a-24x in Action 409.

In **Action 411,** the environmental impact monitoring system 10 may transmit a report regarding the environmental impact associated with each transported item of goods 24a-24x according to the transport assignment to the transport ordering system 20.

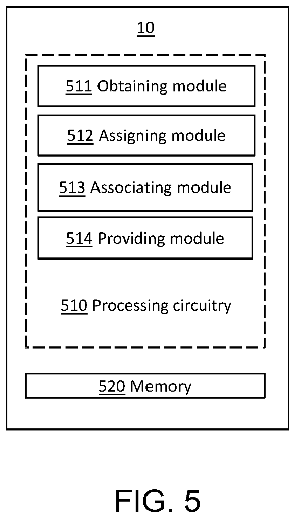

To perform the method actions for monitoring the environmental impact of each item of goods 24a-24x transported as part of a transport assignment 24 for a vehicle 44, the environmental impact monitoring system 10 may comprise the arrangement depicted in **Fig 5.** Fig 5 shows a schematic block diagram of embodiments of an environmental impact monitoring system 10. It should also be noted that, although not shown in Fig. 5, known conventional features of an environmental impact monitoring system 10, such as, for example, a power source, e.g. a battery or main connection, may be comprised in the environmental impact monitoring system 10. The environmental impact monitoring system 10 may comprise **processing circuitry 510** and a **memory 520.**

It should also be noted that some or all of the functionality described in the embodiments above as being performed by the environmental impact monitoring system 10 may be provided by the processing circuitry 510 executing instructions stored on a computer-readable medium, such as, the memory 520 shown in Fig. 5. Alternative embodiments of the environmental impact monitoring system 10 may comprise additional components, such as, for example, an **obtaining module 511,** an **assigning module 512,** an **associating module 513,** and a **providing module 514** responsible for providing its functionality to support the embodiments described herein.

The environmental impact monitoring system 10 or processing circuitry 510 is configured to, or may comprise the obtaining module 511 configured to, obtain a total energy consumption measured for the transport assignment 24 by the vehicle 44. Also, environmental impact monitoring system 10 or processing circuitry 510 is configured to, or may comprise the assigning module 512 configured to, assign a part of the measured total energy consumption to each transported item of goods 24a-24x. Further, the environmental impact monitoring system 10 or processing circuitry 510 is configured to, or may comprise the associating module 513 configured to, associate an environmental impact to each transported item of goods 24a-24x based on the assigned part of the measured total energy consumption to each transported item of goods 24a-24x. Furthermore, the environmental impact monitoring system 10 or processing circuitry 510 is configured to, or may comprise the providing module 514 configured to, provide the environmental impact associated with each transported item of goods 24a-24x.

In some embodiments, the environmental impact monitoring system 10 or processing circuitry 510 may be configured to, or may comprise the obtaining module 511 configured to, receive, from the vehicle 44, information comprising one or more of: an on-board measurement of the actual amount of fuel and/or energy that has been consumed by the vehicle 44 during the transport assignment 24, a fuel/energy type indication of the fuel/energy used by the vehicle 44, one or more time stamp events indicating starts/stops of the vehicle 44, and an on-board measurement of the actual distance that the vehicle 44 has travelled during the transport assignment 24. In this case, according to some embodiments, the environmental impact monitoring system 10 or processing circuitry 510 may be configured to, or may comprise the obtaining module 511 configured to, determine the measured total energy consumption based on the information from the vehicle 44.

In some embodiments, the environmental impact monitoring system 10 or processing circuitry 510 may be configured to, or may comprise the obtaining module 511 configured to, receive, from a transport assignment system 30 and/or a transport system 40, information relating to the transport assignment 24, wherein the information comprise one or more of: a transport order for the transport assignment 24, a vehicle type indication of the vehicle 44 that has been assigned to carry out the transport assignment 24, a fuel/energy type indication of the fuel/energy used by the vehicle 44 that has been assigned to carry out the transport assignment 24, start/stop times of the transport assignment 24, and route information indicating the geographical location of the start/end location of the transport assignment 24. In this case, according to some embodiments, the environmental impact monitoring system 10 or processing circuitry 510 may be configured to, or may comprise the obtaining module 511 configured to, determine the measured total energy consumption based on the information relating to the transport assignment 24 from the transport assignment system 30 and/or the transport system 40.

In some embodiments, the environmental impact monitoring system 10 or processing circuitry 510 may be configured to, or may comprise the obtaining module 511 configured to, receive, from a transportation ordering system 20, information relating to the item of goods 24a-24x transported as part of the transport assignment 24, wherein the information comprise one or more of: the weight and size of each item of goods 24a-24x, the total number of the item of goods 24a-24x, a type indication of each item of goods 24a-24x, a reference to the transport assignment system 40 to which a transport order for the transport assignment 24 has been sent, and route information indicating the geographical location of the transport start/end location of the item of goods 24a-24x. In this case, according to some embodiments, the environmental impact monitoring system 10 or processing circuitry 510 may be configured to, or may comprise the assigning module 512 configured to, assign a part of the measured total energy consumption to each transported item of goods 24a-24x based on the receiving information from the transportation ordering system 20. According to some embodiments, the environmental impact monitoring system 10 or processing circuitry 510 may be configured to, or may comprise the associating module 513 configured to, determine an environmental impact for each transported item of goods 24a-24x based on the assigned part of the measured total energy consumption to each transported item of goods 24a-24x and predetermined or standard correlation estimates between energy consumption and environmental impact. In some embodiments, the environmental impact is represented by a carbon-dioxide, CO₂, and/or carbon-dioxide equivalent, CO₂e, indicator.

Furthermore, the embodiments for monitoring the environmental impact of each item of goods 24a-24x transported as part of a transport assignment 24 for a vehicle 44 described above may be at least partly implemented through one or more processors, such as, the processing circuitry 510 in the environmental impact monitoring system 10 depicted in Fig. 5, together with computer program code for performing the functions and actions of the embodiments herein. The program code mentioned above may also be provided as a computer program product, for instance in the form of a data carrier carrying computer program code or code means for performing the embodiments herein when being loaded into the processing circuitry 510 in the environmental impact monitoring system 10. The data carrier, or computer readable medium, may be one of an electronic signal, optical signal, radio signal or computer-readable storage medium. The computer program code may e.g. be provided as pure program code in the environmental impact monitoring system 10 or on a server and downloaded to the environmental impact monitoring system 10. Thus, it should be noted that the environmental impact monitoring system 10 may in some embodiments be implemented as computer programs stored in memory 520 in Fig. 5, e.g. the computer readable storage unit/module, for execution by processors or processing modules, e.g. the processing circuitry 510 in the environmental impact monitoring system 10 in Fig. 5. By way of example, such computer readable medium or machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable or computer readable medium. Thus, any such connection is properly termed a machine-readable or computer readable medium. Combinations of the above are also included within the scope of machine-readable or computer readable media. Machine or computer executable instructions may comprise, for example, instructions and data that cause a general-purpose computer, special purpose computer or special purpose processing machines to perform a certain function or group of functions.

Those skilled in the art will also appreciate that the processing circuitry 510 and the memory 520 described above may refer to a combination of analog and digital circuits, and/or one or more processors configured with software and/or firmware, e.g. stored in a computer readable storage unit/module, that when executed by the one or more processors such as the processing circuitry 510 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

For reference, it should also be noted that the environmental impact monitoring system 10 may, for example, be manifested as a general-purpose processor, an application specific processor, a circuit containing processing components, a group of distributed processing components, a group of distributed computers configured for processing, a field programmable gate array (FPGA), etc. The processor may be or include any number of hardware components for conducting data or signal processing or for executing computer code stored in memory. The memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection) and includes computer code for executing one or more processes described herein.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatuses, modules, systems and computer program products. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

It should also be noted that the various example embodiments described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures and program modules represent examples of program code for executing steps of the methods disclosed herein. The particular sequence of such executable instructions or associated data structures represents examples of corresponding acts for implementing the functions described in such steps or processes. The embodiments herein are not limited to the above described preferred embodiments. Various alternatives, modifications and equivalents may be used. Therefore, the above embodiments should not be construed as limiting.

## Claims

1. A computer-implemented method for monitoring the environmental impact of each item of goods (24a-24x) transported as part of a transport assignment (24) for a vehicle (44), wherein the method comprises:
*obtaining* (301) a total energy consumption measured for the transport assignment (24) by the vehicle (44);
*assigning* (302) a part of the measured total energy consumption to each transported item of goods (24a-24x);
*associating* (303) an environmental impact to each transported item of goods (24a-24x) based on the assigned part of the measured total energy consumption to each transported item of goods (24a-24x); and
upon request, *providing* (304) the environmental impact associated with each transported item of goods (24a-24x).

2. The method according to claim 1, wherein the *obtaining* (301) comprise
receiving, from the vehicle (44), information comprising one or more of: an on-board measurement of the actual amount of fuel and/or energy that has been consumed by the vehicle (44) during the transport assignment (24), a fuel/energy type indication of the fuel/energy used by the vehicle (44), one or more time stamp events indicating starts/stops of the vehicle (44), and an on-board measurement of the actual distance that the vehicle (44) has travelled during the transport assignment (24); and
determining the measured total energy consumption based on the information from the vehicle (44).

3. The method according to claim 2, wherein the *obtaining* (301) further comprise
receiving, from a transport assignment system (30) and/or a transport system (40), information relating to the transport assignment (24), wherein the information comprise one or more of: a transport order for the transport assignment (24), a vehicle type indication of the vehicle (44) that has been assigned to carry out the transport assignment (24), a fuel/energy type indication of the fuel/energy used by the vehicle (44) that has been assigned to carry out the transport assignment (24), start/stop times of the transport assignment (24), and route information indicating the geographical location of the start/end location of the transport assignment (24); and
determining the measured total energy consumption based on the information relating to the transport assignment (24) from the transport assignment system (30) and/or the transport system (40).

4. The method according to any of claims 1-3, wherein the *assigning* (302) further comprise
receiving, from a transportation ordering system (20), information relating to the item of goods (24a-24x) transported as part of the transport assignment (24), wherein the information comprise one or more of: the weight and size of each item of goods (24a-24x), the total number of the item of goods (24a-24x), a type indication of each item of goods (24a-24x), a reference to the transport assignment system (40) to which a transport order for the transport assignment (24) has been sent, and route information indicating the geographical location of the transport start/end location of the items of goods (24a-24x); and
assigning a part of the measured total energy consumption to each transported item of goods (24a-24x) based on the receiving information from the transportation ordering system (20).

5. The method according to any of claims 1-4, wherein the *associating* (303) further comprise
determining an environmental impact for each transported item of goods (24a-24x) based on the assigned part of the measured total energy consumption to each transported item of goods (24a-24x) and predetermined or standard correlation estimates between energy consumption and environmental impact.

6. The method according to any of claims 1-5, wherein the environmental impact is represented by a carbon-dioxide, CO₂, and/or carbon-dioxide equivalent, CO₂e, indicator.

7. An environmental impact monitoring system (10) for monitoring the environmental impact of each item of goods (24a-24x) transported as part of a transport assignment (24) for a vehicle (44), comprising a processing circuitry (510) and a memory (520), wherein the processing circuitry (510) configured to
obtain a total energy consumption measured for the transport assignment (24) by the vehicle (44), assign a part of the measured total energy consumption to each transported item of goods (24a-24x), associate an environmental impact to each transported item of goods (24a-24x) based on the assigned part of the measured total energy consumption to each transported item of goods (24a-24x), and provide the environmental impact associated with each transported item of goods (24a-24x).

8. The environmental impact monitoring system (10) according to claim 7, wherein the processing circuitry (510) is further configured to receive, from the vehicle (44), information comprising one or more of: an on-board measurement of the actual amount of fuel and/or energy that has been consumed by the vehicle (44) during the transport assignment (24), a fuel/energy type indication of the fuel/energy used by the vehicle (44), one or more time stamp events indicating starts/stops of the vehicle (44), and an on-board measurement of the actual distance that the vehicle (44) has travelled during the transport assignment (24), and determine the measured total energy consumption based on the information from the vehicle (44).

9. The environmental impact monitoring system (10) according to claim 8, wherein the processing circuitry (510) is further configured to receive, from a transport assignment system (30) and/or a transport system (40), information relating to the transport assignment (24), wherein the information comprise one or more of: a transport order for the transport assignment (24), a vehicle type indication of the vehicle (44) that has been assigned to carry out the transport assignment (24), a fuel/energy type indication of the fuel/energy used by the vehicle (44) that has been assigned to carry out the transport assignment (24), start/stop times of the transport assignment (24), and route information indicating the geographical location of the start/end location of the transport assignment (24), and determine the measured total energy consumption based on the information relating to the transport assignment (24) from the transport assignment system (30) and/or the transport system (40).

10. The environmental impact monitoring system (10) according to any of claims 7-9, wherein the processing circuitry (510) is further configured to receive, from a transportation ordering system (20), information relating to the item of goods (24a-24x) transported as part of the transport assignment (24), wherein the information comprise one or more of: the weight and size of each item of goods (24a-24x), the total number of the item of goods (24a-24x), a type indication of each item of goods (24a-24x), a reference to the transport assignment system (40) to which a transport order for the transport assignment (24) has been sent, and route information indicating the geographical location of the transport start/end location of the item of goods (24a-24x), and assign a part of the measured total energy consumption to each transported item of goods (24a-24x) based on the receiving information from the transportation ordering system (20).

11. The environmental impact monitoring system (10) according to any of claims 7-10, wherein the processing circuitry (510) is further configured to determine an environmental impact for each transported item of goods (24a-24x) based on the assigned part of the measured total energy consumption to each transported item of goods (24a-24x) and predetermined or standard correlation estimates between energy consumption and environmental impact.

12. The environmental impact monitoring system (10) according to any of claims 7-11, wherein the environmental impact is represented by a carbon-dioxide, CO₂, and/or carbon-dioxide equivalent, CO₂e, indicator.

13. A computer program product comprising program code means for performing the steps of any of claims 1-6 when said program is run on a computer or on a processing circuitry (510) of an environmental impact monitoring system (10).

14. A computer program carrier carrying a computer program according to claim 13, wherein the computer program carrier is one of an electronic signal, optical signal, radio signal, or computer-readable storage medium.
